# EUROPEAN PATENT SPECIFICATION

(11) **EP 0 655 364 B1**
(45) Date of publication and mention of the grant of the patent: **20.05.1998**
(21) Application number: 94118604.1
(22) Date of filing: 25.11.1994
(51) Int. Cl.: B60N 2/02

(54) **Adjustable vehicle seat**
Einstellbarer Fahrzeugsitz
Siège réglable de véhicule

(30) Priority: 25.11.1993 IT TO930888; 30.09.1994 IT TO940768
(43) Date of publication of application: 31.05.1995
(73) Proprietor: FERRERO GIULIO S.p.A., I-10122 Torino (IT)
(72) Inventor: Ferrero, Ferruccio, I-10040 Savonera, Venaria (IT)
(74) Representative: Jorio, Paolo

(56) References cited:
- EP-A- 0 411 850
- EP-A- 0 589 421
- WO-A-89/03322
- FR-A- 2 446 199
- US-A- 3 617 021

## Description

The present invention relates to an adjustable vehicle seat.

In particular, the present invention relates to an adjustable vehicle seat of the type comprising a main frame; a seat portion; a backrest connected for rotation to the main frame; first adjusting means for adjusting, in use, the position of the seat portion in relation to the vehicle floor; and second adjusting means for adjusting the angular position of the backrest in relation to the seat portion; the first adjusting means comprising guide means fittable to the vehicle floor and for longitudinally guiding the main frame, whereby said first adjusting means also comprise an actuating unit interposed between the seat portion and the main frame (see, for example, EP-A-0 589 421).

The seat portion of known adjustable seats of the aforementioned type is normally adjusted vertically by means of an inclined skid device wherein a first slide, supporting the main frame and defined at the bottom by an inclined edge, is connected in sliding manner to the inclined top edge of a second slide mounted in sliding manner on a longitudinal guide fitted to the vehicle floor.

Though relatively straightforward to produce, devices of the aforementioned types are less than satisfactory from the operating standpoint, by virtue of vertical adjustment of the seat portion also resulting automatically in an undesired change in its longitudinal position.

The above mentioned drawback is overcome by the vehicle seats respectively described in EP-A-589 421 and in DE-A-4 002 946. These vehicle seats comprise first slides for adjusting the longitudinal position of the seats and second slides, which are provided with respective pins, engaged in vertical guides integral with the first slides. The pins are arranged in axial alignment in order to adjust the height of the vehicle seat and, additionally, to rock the vehicle seat about the pins.

Nevertheless, vertical adjustment of the seat portion obviously also results in a similar vertical adjustment of the backrest, i.e. when adjusting the position of the seat portion, the vertical position of the backrest in relation to the seat portion remains unchanged. As such, known adjustable seats are only comfortable and practical for certain users, more specifically those of average height for whom the backrest is designed, and are relatively uncomfortable for anyone well above or below average height.

It is an object of the present invention to provide an adjustable seat of the aforementioned type designed to overcome the aforementioned drawbacks in a straightforward, low-cost manner.

According to the present invention, there is provided an an adjustable vehicle seat comprising a main frame; a seat portion; a backrest connected for rotation to the main frame; first adjusting means for adjusting, in use, the position of the seat portion in relation to the vehicle floor; and second adjusting means for adjusting the angular position of the backrest in relation to the seat portion; the first adjusting means comprising guide means fitted to the vehicle floor and for longitudinally guiding the main frame; characterised in that said actuating unit comprises a further movable frame for supporting said seat portion; and an actuating assembly for moving the movable frame vertically in relation to the main frame.

According to a preferred embodiment of the present invention, the above seat also comprises a lumbar supporting device on the backrest; said drive means being interposed between the seat portion and the main frame, for adjusting the height of the seat portion in relation to the main frame; and shift means being interposed between the backrest and the lumbar supporting device, for adjusting the height of the device in relation to the main frame.

A number of non-limiting embodiments of the present invention will be described by way of example with reference to the accompanying drawings, in which:
Figure 1 shows a front view, with parts in section and parts removed for clarity, of a preferred embodiment of the adjustable seat according to the present invention;

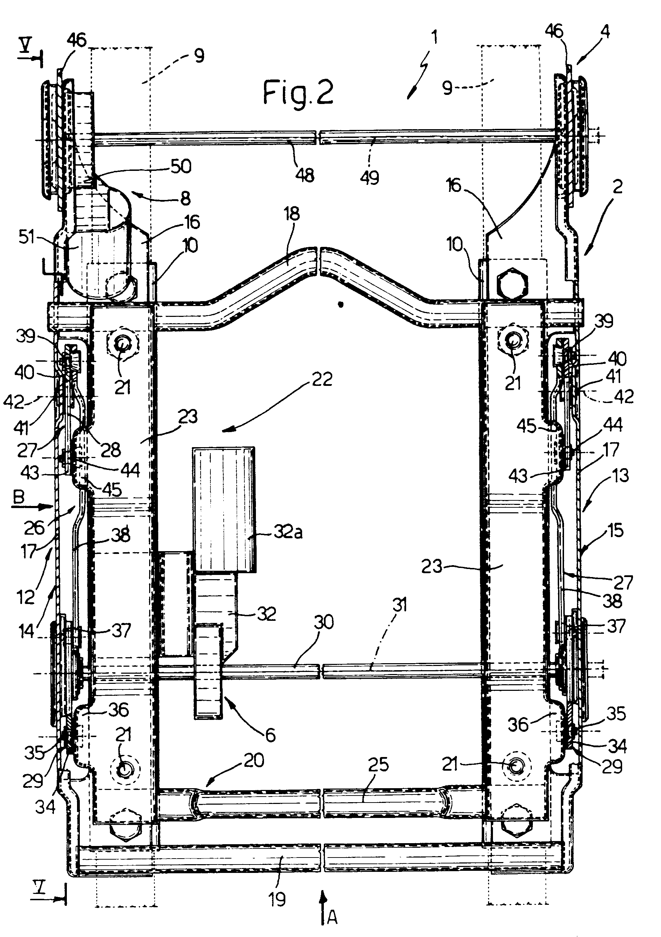

Figure 2 shows a plan view, with parts removed for clarity, of a first preferred embodiment of a detail of the Figure 1 seat;
Figures 3 and 4 show views as indicated respectively by arrows A and B in Figure 2;
Figure 5 shows a section along line V-V in Figure 2;
Figure 6 shows a partial side view of a variation of the Figure 1 seat;
Figures 7 and 8 show side views of respective details of the Figure 6 variation;
Figure 9 shows a larger-scale plan view of a detail of the Figure 6 variation;
Figure 10 shows an exploded plan view of a detail in Figure 9.

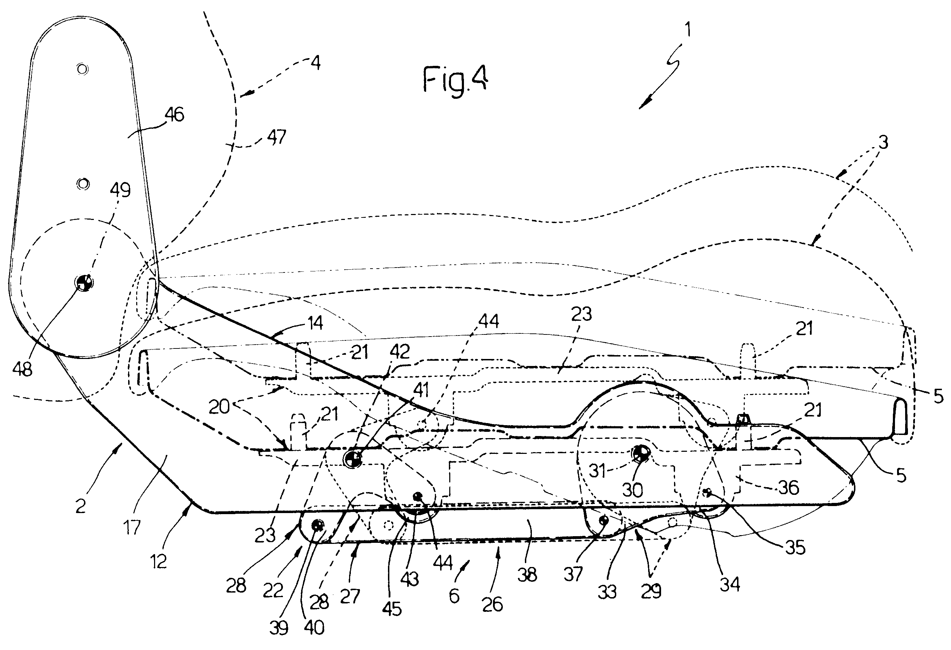

Number 1 in Fig.s 1 to 5 indicates an adjustable vehicle seat, particularly for motor vehicles, comprising a frame 2; a seat portion 3 (Figure 4); and an inclinable backrest 4 connected for rotation to the rear portion of frame 2.

Seat 1 also comprises a bottom element 5 defining the bottom of seat portion 3; a first assembly 6 for adjusting the position of seat portion 3 in relation to floor 7 of the vehicle (not shown); and a second assembly 8 for adjusting the angular position of backrest 4 in relation to frame 2 and seat portion 3.

Assembly 6 comprises two parallel longitudinal guides 9 connected, in use, integral with floor 7; a slide 10 connected in sliding manner to each guide 9; and a known actuating assembly (not shown) for moving slides 10 synchronously back and forth and setting them in given respective positions along guides 9.

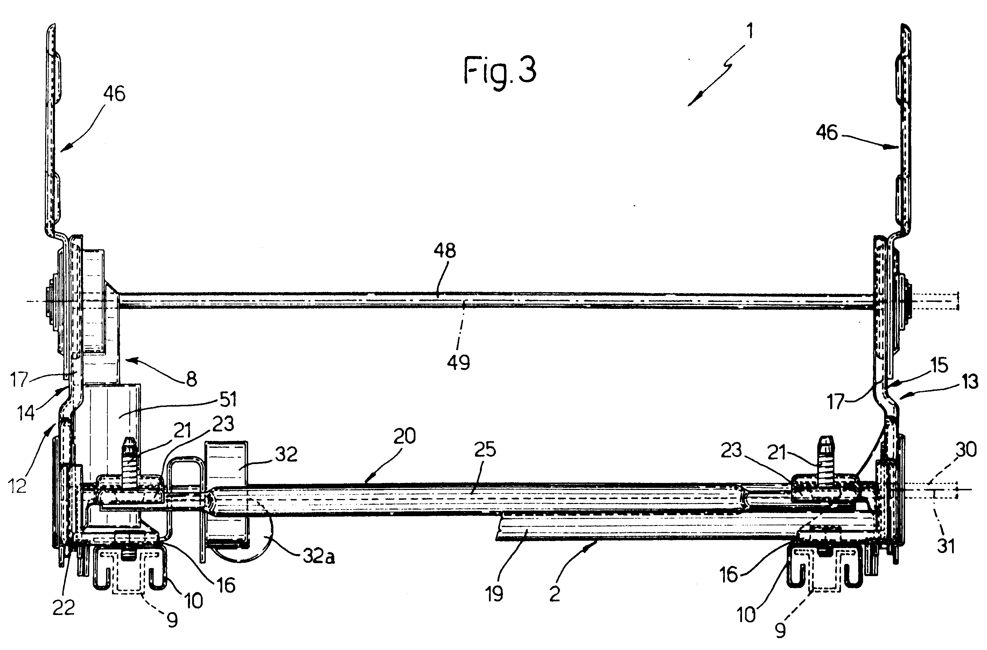

With reference to Figure 3, slides 10 support frame 2 which comprises two longitudinal lateral sides 12 and 13 defined by respective substantially L-shaped brackets 14 and 15. Brackets 14 and 15 each comprise a first plate 16 connected to a respective slide 10; and a second plate 17 extending upwards from respective plate 16 and connected to plate 16 of the other side 12, 13 by two spaced tubular cross members 18 and 19 extending transversely to sides 12 and 13 and forming part of frame 2.

Assembly 6 also comprises a movable frame 20 fitted with bottom element 5 of seat portion 3 by means of a number of screws 21, and forming part of an actuating unit 22 for substantially vertically adjusting the position of seat portion 3 in relation to guides 9 and backrest 4.

More specifically, frame 20 comprises a pair of shaped plates 23 positioned facing and raised in relation to respective plates 16, and connected to each other by a tubular cross member 25 extending, parallel to cross member 19, between the ends of plates 23 opposite those adjacent to backrest 4.

In addition to frame 20, unit 22 also comprises an actuating assembly 26 in turn comprising, for each side 12, 13, an articulated transmission 27, in particular an articulated parallelogram transmission presenting two rocker arm levers 28 and 29, of which levers 29 are drive levers with respective intermediate portions fitted to a drive shaft 30. Adjacent to cross member 19, shaft 30 is connected to plates 17 of sides 12, 13, and is rotated, in relation to frame 2 and about its own axis 31 perpendicular to guides 9, by a known planocentric transmission 32 forming part of assembly 26. Transmission 32 is driven by an electric motor 32a forming part of assembly 26, and is supported, together with electric motor 32a, on bracket 14 of side 12.

According to a variation not shown, transmission 32 and motor 32a are dispensed with, and shaft 30 is rotated about its axis 31 by a knob (not shown) fitted to an end portion of shaft 30 projecting from plate 17 of side 13.

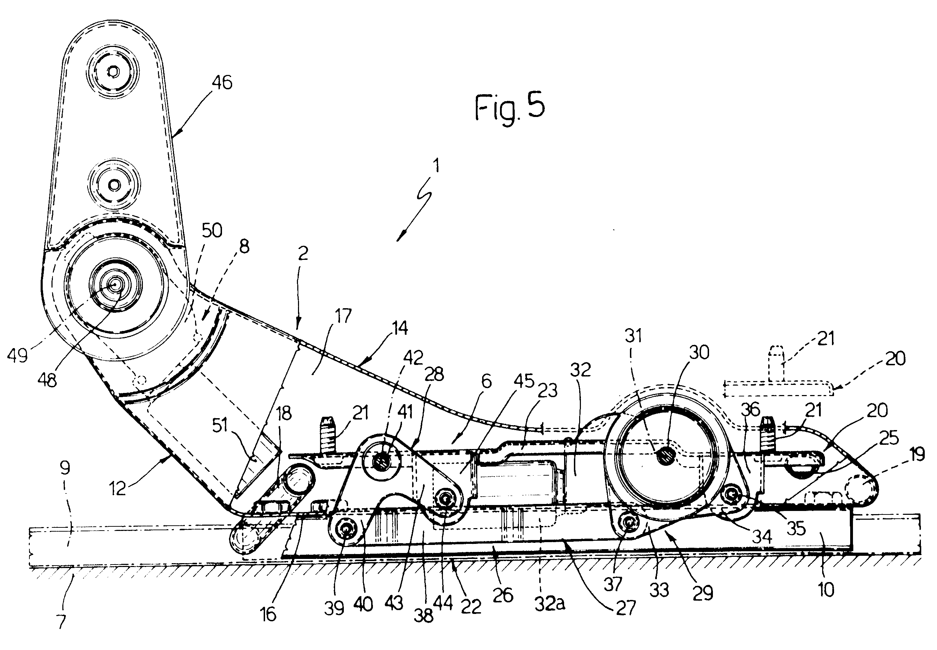

Each rocker arm lever 29 presents a first and second arm 33 and 34 (Figures 4 and 5), of which arm 34 defines a crank for activating frame 20. Arm 34 presents an end portion hinged, by means of a pin 35 parallel to axis 31, to a respective appendix 36 integral with respective plate 23 and extending between respective plates 17 and 23; while arm 33 presents an end portion hinged by a pin 37 to a first end portion of a respective rod 38.

Each rod 38 extends alongside and parallel to respective guide 9, and presents a second end portion hinged, by means of a pin 39 parallel to axis 31, to a first arm 40 of corresponding lever 28. Each lever 28 presents an intermediate portion hinged by a respective pivot 41 to the inner surface of a respective plate 17 so as to rotate about an axis 42 parallel to axis 31 and coincident with the rotation axis 42 of the other lever 28; and a second arm 43 defining a further respective crank for activating frame 20, and presenting an end portion hinged, by means of a pin 44 parallel to pin 39, to a respective appendix 45 integral with respective plate 23 and extending parallel to appendix 36.

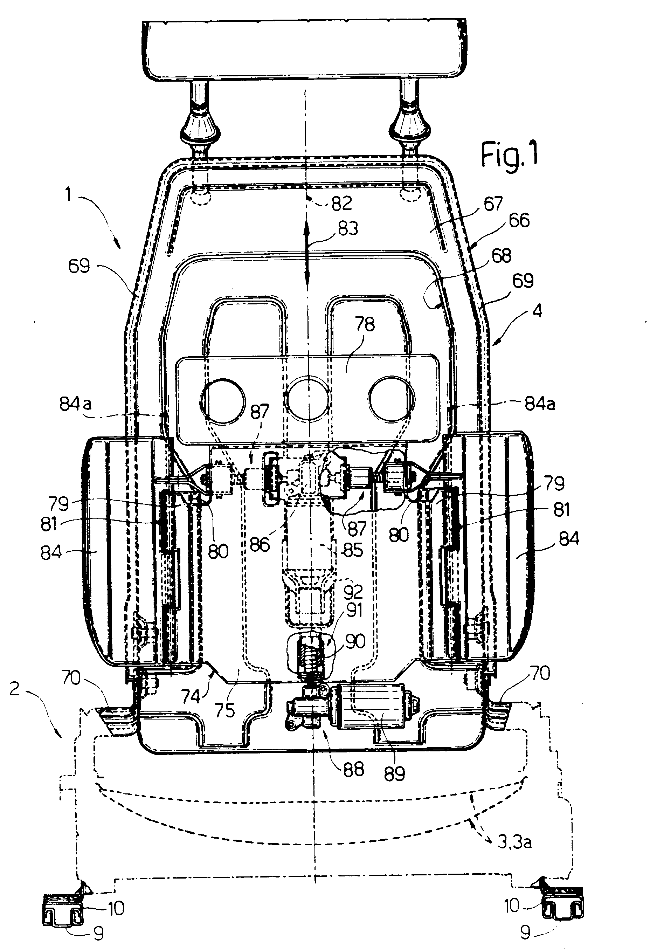

With reference to Figures 1 and 4, backrest 4 is movable in relation to seat portion 3 by assembly 8 which, in the example described, comprises two cranks defined by respective plates 46 on either side of cushion 47 of backrest 4. Plates 46 each present a top portion connected in known manner to backrest 4; and a bottom end portion fitted to an intermediate portion of a drive shaft 48. Shaft 48 is connected to a rear end portion of plates 17, and is rotated about is axis 49, parallel to axis 31, by a planocentric transmission 50 driven by an electric motor 51 and supported, together with motor 51, on bracket 14.

According to a variation not shown, transmission 50 and motor 51 are dispensed with, and shaft 48 is rotated about its axis 49 by a knob (not shown) fitted to the end portion of shaft 48 projecting from plate 17 of side 13.

In actual use, the longitudinal position of seat portion 3 and backrest 4 in relation to floor 7 is adjusted by moving slides 10 one way or the other in relation to respective guides 9 by means of said actuating assembly (not shown); while the vertical position of seat portion 3 in relation to backrest 4 is adjusted by activating motor 32a or using said knob (not shown), to rotate levers 28 and 29, by means of shaft 30 and rods 38, simultaneously and in the same direction in relation to frame 2 and about respective pivot 41 and shaft 30. When levers 28 and 29 are so rotated about respective pivot 41 and shaft 30, arms 43 and 34 of levers 28 and 29 move frame 20 parallel to itself in a practically vertical direction, by virtue of the longitudinal displacement of frame 20 during rotation of arms 43 and 34 being extremely small.

Unlike known adjusting assemblies, assembly 6 therefore provides, not only for longitudinally adjusting the position of seat portion 3, but also for adjusting it substantially vertically in relation to backrest 4, while at the same time maintaining the longitudinal position of seat portion 3 practically unchanged.

As regards the structure of seat 1, it should be pointed out that, by virtue of being defined by two sides 12 and 13 and cross members 18 and 19, frame 2 may be adapted to seats of any width by simply employing cross members of different lengths.

Moreover, connection of backrest 4 directly to frame 2, and more specifically to brackets 14 and 15 connected to slides 10, provides for achieving an adjustable seat which, among other things, is extremely rigid as compared with known seats, and therefore capable of withstanding, with substantially no deformation, any in-service stress to which backrest 4 is subjected by the user.

Another important point to note is that, by virtue of pivoting on frame 2 at axis 31 of drive shaft 30 and being hinged to frame 20 by a pin 35 which is fixed in relation to frame 20, activating levers 29 force frame 20 to move along a circular path about axis 31, so that the vertical movement of frame 20 is accompanied, as stated, by a negligible horizontal movement due to the design of transmission 27.

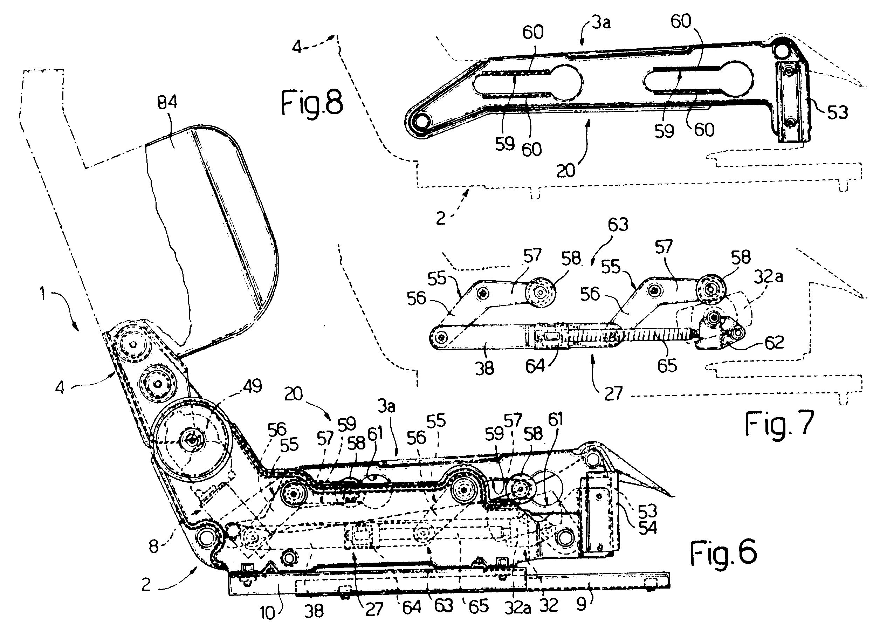

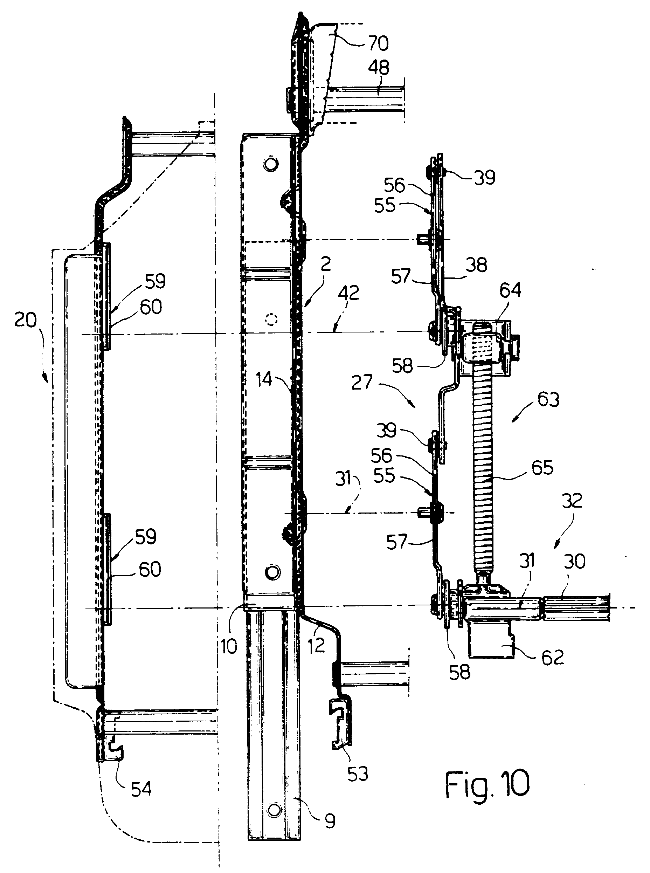

In the variation of seat 1 shown in Figures 6 to 10, to eliminate any horizontal movement of frame 20 when adjusting it vertically, seat portion 3 is replaced by a seat portion 3a, the frame 20 of which is connected to frame 2 by a guide-slide coupling 52 comprising a pair of vertical guides 53 fitted to frame 2 at the front beyond cross member 19, and a pair of respective vertical slides 54 fitted to frame 20 close to cross member 25. Also, each pair of rocker arm levers 29 and 28 of seat portion 3 is replaced, in seat portion 3a, by a pair of identical levers 55, each presenting a first and second arm 56 and 57 defining an angle of roughly 140°. Arms 56 of each pair of levers 55 are connected to each other by rod 38; and each of arms 57 is connected in sliding manner to respective bracket 14, 15 by a wheel-rail coupling comprising a wheel 58 fitted idly to the end of respective arm 57, and a horizontal slot 59 formed in bracket 14 and presenting, along its opposite longitudinal edges, two horizontal rails 60 engaging a peripheral annular groove formed in respective wheel 58. At the opposite end to that facing backrest 4, each slot 59 terminates with a hole 61 for enabling connection of respective wheel 58 to respective rails 60.

Each pair of levers 55 of seat portion 3a is activated by an actuating assembly 26 wherein the motor 32a is substantially equidistant from brackets 14 and 15, and activates the two articulated transmissions 27 via drive shaft 30 and two perpendicular transmissions 62, each of which acts on respective transmission 27 via a respective screw-nut screw transmission 63 comprising a nut screw 64 hinged to the central portion of respective rod 38, and a screw 65 connected to the output of respective transmission 62.

According to a variation not shown, actuating assembly 26 comprises one transmission 63 located centrally in relation to brackets 14 and 15, and interposed between motor 32a and a cross member (not shown) rigidly connecting the two rods 38.

Both the above actuating assemblies 26 may of course be used for driving both seat portion 3 and 3a.

As shown in Figures 1, 6 and 9, backrest 4 is defined at the rear by a box frame 66 made substantially of metal and narrower than frame 2, and comprises a substantially flat wall 67 reinforced by grooves 68, and two sides 69 substantially perpendicular to wall 67 and facing frame 20. Sides 69 laterally define frame 66, and are each fitted at the bottom with a bracket 70 for connecting frame 66 to frame 2 at the rotation axis 49 of backrest 4.

Wall 67 is fitted integral with two guides 71 located between and close to sides 69, and which provide for guiding along backrest 4 a lumbar supporting assembly 72 presenting a device 73 for laterally enclosing the torso of the user.

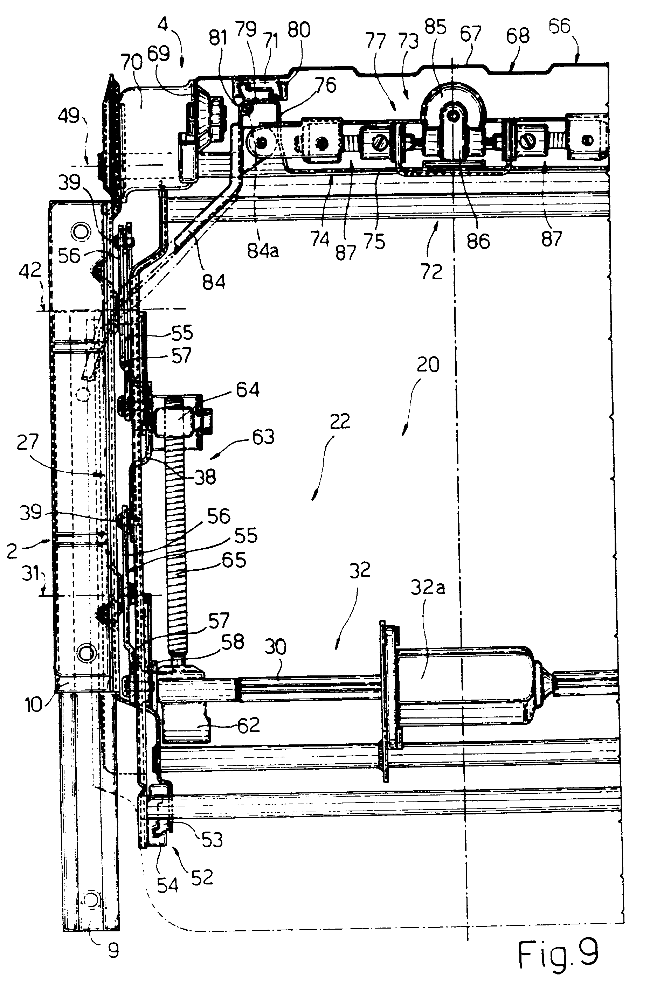

With reference to Figures 1 and 9, assembly 72 comprises a lumbar supporting cradle 74 housed inside frame 66, equidistant from sides 69, and defined by a drawn sheet metal plate with a central wall 75 parallel to wall 67. Cradle 74 also comprises two sides 76 located to the rear of wall 75, substantially parallel to sides 69, and defining, together with wall 75, a cavity housing a device 77 for activating device 73. The top portion of wall 75 is bent rearwards towards wall 67 to define a transversely L-shaped appendix 78 presenting three circular, horizontally-aligned weight reducing holes. Each of sides 76 terminates with a square portion 79 which is fitted integral with a slide 80 mounted in sliding manner on a respective guide 71, and is connected to the rear lateral edge of a wing 84 laterally enclosing device 73 by means of a hinge 81 with its axis parallel to guides 71, to the longitudinal axis 82 of backrest 4, and to the traveling direction 83 of assembly 72 along backrest 4.

Device 77 is equidistant from sides 76, and is hinged to each of wings 84 so as to oppositely rotate wings 84 about axes 84a of respective hinges 81 and between a wide-open position and a narrow position. Device 77 comprises a motor 85 parallel to guides 71, equidistant from hinges 81 and integral with wall 75 of cradle 74; a reduction gear 86 in series with motor 85 and presenting an input and two opposed substantially horizontal outputs parallel to wall 67; and two screw-nut screw transmissions 87, each interposed between one of said outputs and a respective wing 84.

Assembly 72 comprises a unit 88 for adjusting the vertical position of device 73 along backrest 4. Unit 88 comprises a motor 89 integral with backrest 4 and which provides for rotating a screw 90 parallel to axis 82 and connected by a screw-nut screw coupling 91 to the casing of motor 85, for moving motor 85, and with it the whole of device 73, along a guide 92 integral with wall 67 and parallel to axis 82.

In actual use, the position of lumbar supporting assembly 72 along backrest 4 is adjusted, normally as a function of the position of seat portion 3a in relation to backrest 4, by activating motor 89; while the angular position of wings 84 is adjusted by activating motor 85.

Both assembly 72 and device 73 may obviously be dispensed with.

## Claims

1. An adjustable vehicle seat (1) comprising a main frame (2); a seat portion (3)(3a); a backrest (4) connected for rotation to the main frame (2); first adjusting means (6) for adjusting, in use, the position of the seat portion (3)(3a) in relation to the vehicle floor (7); and second adjusting means (8) for adjusting the angular position of the backrest (4) in relation to the seat portion (3)(3a); the first adjusting means (6) comprising guide means (9) fitted to the vehicle floor (7) and for longitudinally guiding the main frame (2); whereby said first adjusting means (6) also comprise an actuating unit (22) interposed between the seat portion (3)(3a) and the main frame (2), characterized in that said actuating unit (22) comprises a further movable frame (20) for supporting said seat portion (3)(3a); and an actuating assembly (26) for moving the movable frame (20) vertically in relation to the main frame (2).

2. A seat as claimed in Claim 1, characterized in that said main frame (2) comprises two longitudinal sides (12, 13); and said actuating assembly (26) comprises two transmission devices (27), each relative to a respective said side (12, 13); and actuating means (30, 32, 33, 38)(30, 63, 56, 38) for activating the transmission devices (27).

3. A seat as claimed in Claim 2, characterized in that each said transmission device (27) is an articulated parallelogram transmission.

4. A seat as claimed in Claim 3, characterized in that each transmission device (27) comprises a first (29)(55) and second (28)(55) rocker arm lever pivoting centrally on the main frame (2) so as to rotate, in relation to the main frame (2), about a respective first (31) and second (42) axis parallel to each other; and a connecting rod (38) connecting said two levers (28, 29) (55, 55) to each other; each rocker arm lever (28)(29)(55) comprising a first (40)(33)(56) and second (43)(34)(57) arm; each second arm (43)(34)(57) being connected to the movable frame (20); and each first arm (40)(33)(56) being a crank connected to said connecting rod (38).

5. A seat as claimed in Claim 4, characterized in that said actuating means (30, 32, 33, 38) (30, 63, 56, 38) comprise at least one transmission (32)(63); and a motor (32a) for activating the transmission (32)(63).

6. A seat as claimed in Claim 5, characterized in that said transmission (32) presents an output (30) connected to said first rocker arm lever (29) of each transmission device (27).

7. A seat as claimed in Claim 6, characterized in that said transmission (32) is a planocentric transmission.

8. A seat as claimed in Claim 5, characterized in that said transmission (63) presents an output (64) connected to at least one of said connecting rods (38).

9. A seat as claimed in Claim 8, characterized in that said actuating means (30, 63, 56, 38) comprise two said transmissions (63); each said transmission (63) presenting a respective output (64) connected to a respective said connecting rod (38).

10. A seat as claimed in Claim 8 or 9, characterized in that each said transmission (63) is a screw-nut screw transmission.

11. A seat as claimed in any one of the foregoing Claims from 5 to 10, characterized in that each said second arm (43)(34) is hinged to the movable frame (20).

12. A seat as claimed in any one of the foregoing Claims from 5 to 11, characterized in that each said second arm (57) is connected to the movable frame by means of a substantially horizontal guide-slide coupling (59-58).

13. A seat as claimed in any one of the foregoing Claims, characterized in that it also comprises a lumbar supporting device (72) on said backrest (4); said actuating unit (22) being interposed between the seat portion (3)(3a) and the main frame (2), for adjusting the height of the seat portion (3)(3a) in relation to the main frame (2); and shift means (88) being interposed between the backrest (4) and the lumbar supporting device (72), for adjusting the height of the lumbar supporting device in relation to the main frame (2).

14. A seat as claimed in Claim 13, characterized in that the lumbar supporting device (72) comprises adjustable means (73) for laterally enclosing the user.

15. A seat as claimed in Claim 14, characterized in that said enclosing means (73) comprise two wings (84) projecting from the backrest (4) on the same side as the seat portion (3)(3a), and mounted so as to rotate about respective axes (84a) in relation to the backrest (4); drive means (77) being provided for oppositely rotating said wings (84) between a wide-open position and a narrow position.

16. A seat as claimed in Claim 15, characterized in that the lumbar supporting device (72) comprises guide means (71) integral with and extending longitudinally along the backrest (4); and slide means (74) fitted in sliding manner to said guide means (71); said shift means (88) being interposed between said guide means (71) and said slide means (74).

17. A seat as claimed in Claim 16, characterized in that said wings (84) are mounted for rotation on said slide means (74).

## Patentansprüche

1. Einstellbarer Fahrzeugsitz (1), mit einem Hauptrahmen (2), einem Sitzabschnitt (3)(3a); einer Rückenlehne (4), die mit dem Hauptrahmen (2) drehbar verbunden ist; einer ersten Einstelleinrichtung (6) zum Einstellen der Stellung des Sitzabschnitts (3)(3a) in bezug auf den Fahrzeugboden (7) während seines Gebrauchs; und einer zweiten Einstelleinrichtung (8) zum Einstellen der Winkelstellung der Rückenlehne (4) in bezug auf den Sitzabschnitt (3)(3a); wobei die erste Einstelleinrichtung (6) eine Führungseinrichtung (9) enthält, die am Fahrzeugboden (7) befestigt ist, um den Hauptrahmen (2) in Längsrichtung zu führen; wobei die erste Einstelleinrichtung (6) außerdem eine Betätigungseinheit (22) enthält, die zwischen den Sitzabschnitt (3)(3a) und den Hauptrahmen (2) eingefügt ist, dadurch gekennzeichnet, daß die Betätigungseinheit (22) einen weiteren beweglichen Rahmen (20) zum Unterstützen des Sitzabschnitts (3)(3a); und eine Betätigungsbaueinheit (26) zum Bewegen des beweglichen Rahmens (20) in vertikaler Richtung in bezug auf den Hauptrahmen (2) enthält.

2. Sitz nach Anspruch 1, dadurch gekennzeichnet, daß der Hauptrahmen (2) zwei longitudinale Seiten (12, 13) enthält; und die Betätigungsbaueinheit (26) zwei Kraftübertragungsvorrichtungen (27), wovon jede einer entsprechenden Seite (12, 13) zugeordnet ist; sowie eine Betätigungseinrichtung (30, 32, 33, 38)(30, 63, 56, 38) zum Betätigen der Kraftübertragungsvorrichtungen (27) enthält.

3. Sitz nach Anspruch 2, dadurch gekennzeichnet, daß jede der Kraftübertragungsvorrichtungen (27) eine Gelenk-Parallelogrammkraftübertragung ist.

4. Sitz nach Anspruch 3, dadurch gekennzeichnet, daß jede Kraftübertragungsvorrichtung (27) einen ersten (29) (55) und einen zweiten (28) (55) Schwenkhebel, der mittig am Hauptrahmen (2) in der Weise drehbar ist, daß er sich in bezug auf den Hauptrahmen (2) um eine erste (31) bzw. eine zweite (42) Achse, die zueinander parallel sind, dreht; sowie eine Verbindungsstange (38) enthält, die die beiden Hebel (28, 29) (55, 55) miteinander verbindet; wobei jeder Schwenkhebel (28) (29) (55) einen ersten (40) (33) (56) und einen zweiten (43) (34) (57) Arm enthält; wobei jeder zweite Arm (43) (34) (57) mit dem beweglichen Rahmen (23) verbunden ist; und wobei jeder erste Arm (40) (33) (56) eine mit der Verbindungsstange (38) verbundene Kurbel ist.

5. Sitz nach Anspruch 4, dadurch gekennzeichnet, daß die Betätigungseinrichtung (30, 32, 33, 38) (30, 63, 56, 38) wenigstens eine Kraftübertragungsvorrichtung (32) (63); und einen Motor (32a) zum Aktivieren der Kraftübertragung (32) (63) enthält.

6. Sitz nach Anspruch 5, dadurch gekennzeichnet, daß die Kraftübertragung (32) einen Ausgang (30) aufweist, der mit dem ersten Schwenkhebel (29) jeder Kraftübertragungsvorrichtung (27) verbunden ist.

7. Sitz nach Anspruch 6, dadurch gekennzeichnet, daß die Kraftübertragung (32) eine planzentrische Kraftübertragung ist.

8. Sitz nach Anspruch 5, dadurch gekennzeichnet, daß die Kraftübertragung (63) einen Ausgang (64) aufweist, der mit wenigstens einer der Verbindungsstangen (38) verbunden ist.

9. Sitz nach Anspruch 8, dadurch gekennzeichnet, daß die Betätigungseinrichtung (30, 63, 56, 38) zwei Kraftübertragungen (63) enthält; wobei jede Kraftübertragung (63) einen entsprechenden Ausgang (64) aufweist, der mit einer entsprechenden Verbindungsstange (38) verbunden ist.

10. Sitz nach Anspruch 8 oder 9, dadurch gekennzeichnet, daß jede der Kraftübertragungen (63) eine Mutter/Schrauben-Kraftübertragung ist.

11. Sitz nach irgendeinem der vorangehenden Ansprüche 5 bis 10, dadurch gekennzeichnet, daß jeder zweite Arm (43) (34) an dem beweglichen Rahmen (20) angelenkt ist.

12. Sitz nach irgendeinem der vorangehenden Ansprüche 5 bis 11, dadurch gekennzeichnet, daß jeder zweite Arm (57) mit dem beweglichen Rahmen mittels einer im wesentlichen horizontalen Führungsgleitkupplung (59-58) verbunden ist.

13. Sitz nach irgendeinem der vorangehenden Ansprüche, dadurch gekennzeichnet, daß er außerdem in der Rückenlehne (4) eine Lendenunterstützungsvorrichtung (72) enthält; wobei die Betätigungseinheit (22) zwischen den Sitzabschnitt (3)(3a) und den Hauptrahmen (2) eingefügt ist, um die Höhe des Sitzabschnitts (3)(3a) in bezug auf den Hauptrahmen (2) einzustellen; und eine Verschiebungseinrichtung (88) zwischen die Rückenlehne (4) und die Lendenunterstützungsvorrichtung (72) eingefügt ist, um die Höhe der Lendenunterstützungsvorrichtung in bezug auf den Hauptrahmen (2) einzustellen.

14. Sitz nach Anspruch 13, dadurch gekennzeichnet` daß die Lendenunterstützungsvorrichtung (72) eine einstellbare Einrichtung (73) zum seitlichen Umschließen des Benutzers enthält.

15. Sitz nach Anspruch 14, dadurch gekennzeichnet, daß die Umschließungseinrichtung (73) zwei Flügel (84) aufweist, die von der Rückenlehne (4) auf der gleichen Seite wie der Sitzabschnitt (3)(3a) vorstehen und in der Weise angebracht sind, daß sie um entsprechende Achsen (84a) in bezug auf die Rückenlehne (4) drehbar sind; wobei eine Antriebseinrichtung (77) vorgesehen ist, um die Flügel (84) in zueinander entgegengesetzten Richtungen zwischen der weit geöffneten Stellung und der engen Stellung zu drehen.

16. Sitz nach Anspruch 15, dadurch gekennzeichnet, daß die Lendenunterstützungsvorrichtung (72) eine Führungseinrichtung (71), die mit der Rückenlehne (4) einteilig ausgebildet ist und sich in Längsrichtung längs der Rückenlehne (4) erstreckt; und eine Gleiteinrichtung (74) enthält, die an der Führungseinrichtung (71) gleitend angebracht ist; wobei die Verschiebungseinrichtung (88) zwischen die Führungseinrichtung (71) und die Gleiteinrichtung (74) eingefügt ist.

17. Sitz nach Anspruch 16, dadurch gekennzeichnet, daß die Flügel (84) an der Gleiteinrichtung (74) drehbar angebracht sind.

## Revendications

1. Siège réglable (1) de véhicule, comprenant un bâti principal (2), une partie d'assise (3), (3a), un dossier (4) relié au bâti principal (2) pour pouvoir tourner, un premier moyen de réglage (6) servant, au cours de l'utilisation, à régler la position de la partie d'assise (3) (3a) par rapport au plancher (7) du véhicule, et un deuxième moyen de réglage (8) servant à régler la position angulaire du dossier (4) par rapport à la partie d'assise (3) (3a), le premier moyen de réglage (6) comprenant un moyen de guidage (9) installé sur le plancher (7) du véhicule et servant à guider longitudinalement le bâti principal (2), ledit premier moyen de réglage (6) comportant également un système d'actionnement (22) intercalé entre la partie d'assise (3) (3a) et le bâti principal (2), caractérisé en ce que ledit système d'actionnement (22) comporte un autre bâti mobile (20) servant à supporter ladite partie d'assise (3) (3a), et un dispositif d'actionnement (26) servant à déplacer verticalement le bâti mobile (20) par rapport au bâti principal (2).

2. Siège selon la revendication 1, caractérisé en ce que ledit bâti principal (2) comporte deux côtés latéraux longitudinaux (12), (13), et ledit dispositif d'actionnement (26) comporte deux dispositifs de transmission (27) concernant chacun un côté respectif (12), (13) et des moyens d'actionnement (30, 32, 33, 38) (30, 63, 56, 38) servant à actionner les dispositifs de transmission (27).

3. Siège selon la revendication 2, caractérisé en ce que chaque dispositif de transmission (27) est une transmission articulée en parallélogramme.

4. Siège selon la revendication 3, caractérisé en ce que chaque dispositif de transmission (27) comporte un premier (29) (55) et un deuxième (28) (55) leviers de culbuteur pivotant en position centrale sur le bâti principal (2) afin de tourner, par rapport au bâti principal (2), autour d'un premier (31) et d'un deuxième (42) axes respectifs parallèles l'un à l'autre, et une tige de liaison (38) reliant lesdits deux leviers (28, 29) (55, 55) l'un à l'autre, chaque levier (28) (29) (55) de culbuteur comprenant un premier (40) (33) (56) et un deuxième (43) (34) (57) bras, chaque deuxième bras (43) (34) (57) étant relié au bâti mobile (20), et chaque premier bras (40) (33) (56) étant une manivelle reliée à ladite tige de liaison (38).

5. Siège selon la revendication 4, caractérisé en ce que lesdits moyens d'actionnement (30, 32, 33, 38) (30, 63, 56, 38) comportent au moins une transmission (32) (63), et un moteur (32a) servant à actionner la transmission (32) (63).

6. Siège selon la revendication 5, caractérisé en ce que ladite transmission (32) présente une sortie (30) reliée au premier levier (29) de culbuteur de chaque dispositif de transmission (27).

7. Siège selon la revendication 6, caractérisé en ce que ladite transmission (32) est une transmission planocentrique.

8. Siège selon la revendication 5, caractérisé en ce que ladite transmission (63) présente une sortie (64) reliée à au moins une desdites tiges de liaison (38).

9. Siège selon la revendication 8, caractérisé en ce que desdits moyens d'actionnement (30, 63, 56, 38) comportent deux dites transmissions (63), chaque dite transmission (63) présentant une sortie respective (64) reliée à une tige de liaison respective (38).

10. Siège selon la revendication 8 ou 9, caractérisé en ce que chaque dite transmission (63) est une transmission à vis-écrou fileté.

11. Siège selon l'une quelconque des revendications 5 à 10 ci-dessus, caractérisé en ce que chaque deuxième bras (43) (34) est articulé sur le bâti mobile (20).

12. Siège selon l'une quelconque des revendications 5 à 11 ci-dessus, caractérisé en ce que chaque dit deuxième bras (57) est relié au bâti mobile par l'intermédiaire d'un accouplement sensiblement horizontal (59-58) à guide-glissière.

13. Siège selon l'une quelconque des revendications précédentes, caractérisé en ce qu'il comporte également un dispositif de soutien lombaire (72) sur ledit dossier (4), ledit dispositif d'actionnement (22) étant intercalé entre la partie d'assise (3) (3a) et le bâti principal (2), pour régler la hauteur de la partie d'assise (3) (3a) par rapport au bâti principal (2), et un moyen de déplacement (88) étant intercalé entre le dossier (4) et le dispositif de soutien lombaire (72), pour régler la hauteur du dispositif de soutien lombaire par rapport au bâti principal (2).

14. Siège selon la revendication 13, caractérisé en ce que le dispositif de soutien lombaire (72) comporte un moyen réglable (73) servant à envelopper latéralement l'utilisateur.

15. Siège selon la revendication 14, caractérisé en ce que lesdits moyens d'enveloppement (73) comportent deux ailes (84) dépassant du dossier (84), du même côté que la partie formant banquette (3) (3a), et montées de façon à tourner autour d'axes respectifs (84a) par rapport au dossier (4), un moyen d'entraînement (77) étant prévu pour faire tourner en sens inverse lesdites ailes (84) entre une position d'ouverture maximale et une position d'ouverture étroite.

16. Siège selon la revendication 15, caractérisé en ce que le dispositif de soutien lombaire (72) comprend un moyen formant guide (71) faisant corps avec le dossier (4) et s'étendant longitudinalement sur celui-ci, et un moyen formant glissière (74) disposé de manière coulissante par rapport audit moyen formant guide (71), ledit moyen de déplacement (88) étant intercalé entre ledit moyen formant guide (71) et ledit moyen formant glissière (74).

17. Siège selon la revendication 16, caractérisé en ce que lesdites ailes (84) sont montées pour pouvoir tourner sur ledit moyen formant glissière (74).
